(19) Europäisches Patentamt
European Patent Office
Office européen des brevets

(11) **EP 3 882 895 A1**

(12) **DEMANDE DE BREVET EUROPEEN**

(43) Date de publication:
**22.09.2021 Bulletin 2021/38**

(51) Int Cl.:
**G09C 1/00** (2006.01)     **H04L 9/00** (2006.01)
**H04L 9/06** (2006.01)

(21) Numéro de dépôt: **21160883.1**

(22) Date de dépôt: **05.03.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **16.03.2020 FR 2002563**

(71) Demandeur: **STMicroelectronics (Rousset) SAS**
**13790 Rousset (FR)**

(72) Inventeurs:
• LINGE, Yanis
  **13710 FUVEAU (FR)**
• LANDRY, Simon
  **13100 AIX-EN-PROVENCE (FR)**

(74) Mandataire: **Cabinet Beaumont**
**4, Place Robert Schuman**
**B.P. 1529**
**38025 Grenoble Cedex 1 (FR)**

(54) **DÉTECTION DE FAUTES PAR UN CIRCUIT ÉLECTRONIQUE**

(57) La présente description concerne un procédé (200) de détection de fautes dans une application, par un circuit électronique, d'une première fonction à un message, comprenant les étapes suivantes :
générer (203), à partir du message, un nombre N pair non nul de premiers ensembles différents comportant chacun P éléments de données ;
appliquer (207), aux P éléments de données de chaque premier ensemble, une ou plusieurs deuxièmes fonctions fournissant, pour chaque premier ensemble, un deuxième ensemble comportant Q images ; et
cumuler (211) toutes les images, en commençant par au plus Q-1 images choisies parmi les Q images d'un même deuxième ensemble.

**Fig. 2**

200

201 — MESSAGE M

DATA MASKING — 203

205 — N SETS $S^i$ OF P SHARES $x_j^i$

APPLICATION OF FUNCTION(S) — 207

209 — N SETS $T^i$ OF Q IMAGES $y_k^i$

ACCUMULATION — 211

213 — FAULT DETECTION

EP 3 882 895 A1

**Description**

Domaine technique

La présente description concerne de façon générale les circuits électroniques et, plus particulièrement, les circuits exécutant des algorithmes de cryptographie.

Technique antérieure

Dans de nombreuses applications, des circuits électroniques mettent en œuvre des algorithmes de chiffrement, d'authentification, de calcul de signature, et, plus généralement, des algorithmes manipulant des données dites secrètes, c'est-à-dire dont on souhaite réserver l'accès à certains utilisateurs ou circuits. Il existe notamment des algorithmes de cryptographie symétrique, ou à clé secrète, par exemple des algorithmes de type AES ou SM4, qui permettent de chiffrer et de déchiffrer des messages à l'aide d'une même clé.

De nombreuses méthodes, dites attaques, existent pour tenter de découvrir ou pirater des données secrètes manipulées par ces algorithmes. Parmi ces attaques, des attaques dites par canaux cachés (Side-Channel Attacks - SCA, en anglais) exploitent des informations telles que la consommation du circuit (attaques SPA, DPA), son rayonnement électromagnétique, etc. L'interprétation de ces informations est susceptible de renseigner le pirate sur la ou les données secrètes. On connaît aussi des attaques dites par faute (fault attacks, en anglais), qui consistent à provoquer volontairement un fonctionnement inhabituel du circuit afin d'en déduire des informations sur la ou les données secrètes.

Résumé de l'invention

Il existe un besoin d'améliorer la protection des données manipulées par des circuits exécutant des algorithmes de cryptographie contre des attaques.

Un mode de réalisation pallie tout ou partie des inconvénients des procédés et circuits connus de protection des algorithmes de cryptographie contre des attaques.

Un mode de réalisation prévoit un procédé de détection de fautes dans une application, par un circuit électronique, d'une première fonction à un message, comprenant les étapes suivantes :

générer, à partir du message, un nombre N pair non nul de premiers ensembles différents comportant chacun P éléments de données ;

appliquer, aux P éléments de données de chaque premier ensemble, une ou plusieurs deuxièmes fonctions fournissant, pour chaque premier ensemble, un deuxième ensemble comportant Q images ; et

cumuler toutes les images, en commençant par au plus Q-1 images choisies parmi les Q images d'un même deuxième ensemble.

Selon un mode de réalisation, chaque premier ensemble d'éléments de données est généré par un masquage, de préférence aléatoire, du message.

Selon un mode de réalisation, le masquage du message est effectué par un opérateur Ou-Exclusif.

Selon un mode de réalisation, le cumul des images est effectué par un opérateur Ou-Exclusif.

Selon un mode de réalisation, la première fonction est une transformation linéaire.

Selon un mode de réalisation, chaque image d'un même deuxième ensemble est obtenue en appliquant une même deuxième fonction à chaque élément de données du premier ensemble correspondant.

Selon un mode de réalisation, la première fonction est une transformation non linéaire.

Selon un mode de réalisation, chaque image d'un même deuxième ensemble est obtenue en appliquant une deuxième fonction, parmi plusieurs deuxièmes fonctions différentes, à au plus P-1 éléments de données du premier ensemble correspondant.

Selon un mode de réalisation, le procédé comprend l'étape de vérifier si un résultat du cumul des images des N deuxièmes ensembles est nul.

Selon un mode de réalisation, la ou les deuxièmes fonctions sont appliquées dans un ordre aléatoire aux éléments de données de chaque premier ensemble.

Un mode de réalisation prévoit un circuit électronique, configuré pour mettre en œuvre le procédé tel que décrit.

Selon un mode de réalisation, une zone mémoire est destinée à mémoriser des valeurs intermédiaires provenant du cumul des images.

Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :

la figure 1 représente, de façon schématique et partielle, un exemple de circuit électronique du type auquel s'appliquent, à titre d'exemple, les modes de mise en œuvre décrits ;

la figure 2 représente, de façon schématique et sous forme de blocs, un mode de mise en œuvre d'un procédé de détection de fautes ;

la figure 3 représente, de façon schématique et sous forme de blocs, un exemple d'application du procédé de la figure 2 à une transformation linéaire ;

la figure 4 représente, de façon schématique et sous forme de blocs, un autre exemple d'application du procédé de la figure 2 à une transformation non linéaire ; et

la figure 5 représente, de façon schématique et sous forme de blocs, des étapes associées au mode de mise en œuvre du procédé de la figure 2.

Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, les algorithmes de cryptographie n'ont pas été détaillés, les modes de réalisation et modes de mise en œuvre décrits étant compatibles avec les algorithmes de cryptographie usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

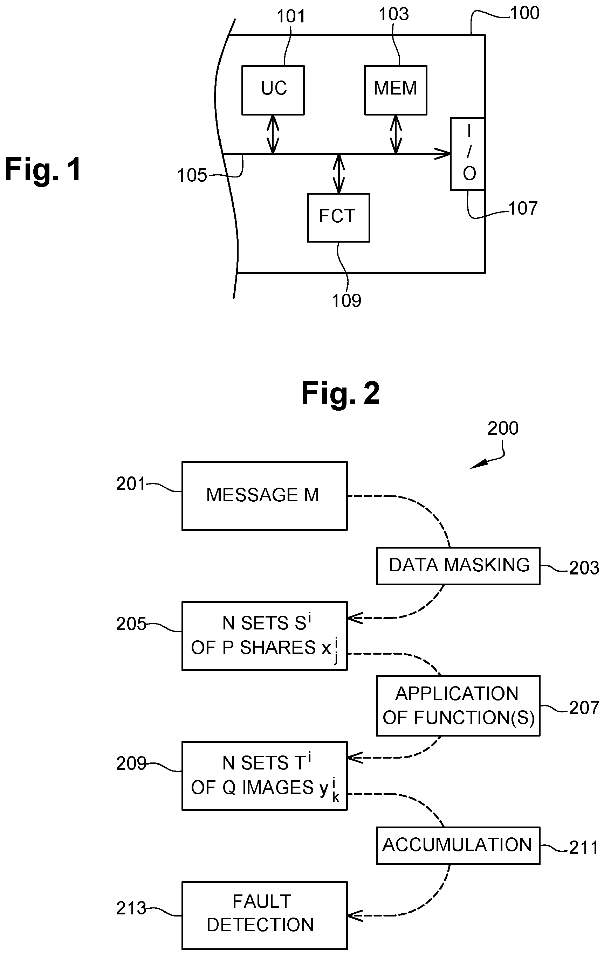

La figure 1 représente, de façon schématique et partielle, un exemple de circuit électronique 100 du type auquel s'appliquent, à titre d'exemple, les modes de mise en œuvre décrits.

Dans l'exemple représenté, le circuit 100 comporte :

une entité de calcul 101 (UC), par exemple une machine d'états, un microprocesseur, un circuit logique programmable, etc. ;
au moins une zone 103 (MEM) de stockage volatil ou non volatil, ou zone mémoire, permettant par exemple de stocker tout ou partie de données et/ou de clés ;
un ou plusieurs bus 105 de données, d'adresses et/ou de commandes entre les différents éléments internes au circuit 100 ; et
une ou plusieurs interfaces d'entrée-sortie 107 (I/O) de communication avec l'extérieur du circuit 100.

À titre d'exemple, le circuit 100 comporte divers autres circuits spécifiques à l'application. Ces circuits sont, en figure 1, symbolisés par un bloc 109 (FCT).

Dans la suite de la description, on considère arbitrairement que le circuit 100 est configuré pour mettre en œuvre, ou implémenter, tout ou partie d'un algorithme de cryptographie, par exemple un algorithme de chiffrement symétrique de type AES ou SM4. Pour simplifier, on considère par exemple que le circuit 100 est notamment configuré pour appliquer une première fonction cryptographique (non représentée) à un message, noté M. À titre d'exemple, le message M correspond à tout ou partie de données secrètes manipulées par le circuit 100 au cours de l'exécution de l'algorithme de chiffrement.

La figure 2 représente, de façon schématique et sous forme de blocs, un mode de mise en œuvre d'un procédé 200 de détection de fautes. Le procédé 200 décrit en relation avec la figure 2 a par exemple pour but de détecter une éventuelle attaque par faute au cours de l'application de la première fonction cryptographique au message M.

À titre d'exemple, le procédé 200 de la figure 2 est mis en œuvre dans le cadre d'une exécution ou implémentation dite « à seuils » (threshold implementation, en anglais) de l'algorithme de chiffrement.

Dans l'exemple représenté, le message M (bloc 201, MESSAGE M) est masqué (bloc 203, DATA MASKING). Le masquage 203 permet plus précisément de générer (bloc 205, N SETS $S^i$ OF P SHARES $x^i_j$), à partir d'un même message M, un nombre N de premiers ensembles $S^i$ d'éléments de données $x^i_j$. À titre d'exemple, les N ensembles $S^i$ comportent chacun un même nombre P, entier et supérieur ou égal à deux, d'éléments de données $x^i_j$.

Dans la présente description, $S^i$ ($1 \leq i \leq N$) désigne le $i^{ème}$ ensemble d'éléments de données et $x^i_j$ ($1 \leq j \leq P$) désigne le $j^{ème}$ élément de données du $i^{ème}$ ensemble $S^i$. Dans la présente description, l'exposant i n'est pas utilisé pour désigner une élévation à la puissance i.

Selon un mode de mise en œuvre, on génère ou on choisit les éléments de données $x^i_j$ afin qu'une combinaison, par exemple par un opérateur Ou-Exclusif (XOR), des P éléments de données $x^i_j$ de chaque ensemble $S^i$ corresponde au message M. En d'autres termes, on fait en sorte que les P éléments de données $x^i_1$ à $x^i_P$ de chaque ensemble $S^i$ vérifient la relation suivante :

[Math 1]

$$M = x^i_1 \oplus x^i_2 \oplus \cdots \oplus x^i_P$$

En pratique, dans la présente description, l'opérateur Ou-Exclusif peut correspondre à un opérateur matériel ou à l'application d'une fonction logicielle Ou-Exclusif (XOR).

Selon un mode de mise en œuvre, le masquage 203 du message M est un masquage aléatoire. À titre d'exemple, les éléments de données $x^i_j$ de chaque ensemble $S^i$ sont générés à partir d'au moins une combinaison, par un opérateur Ou-Exclusif, du message M avec un ou plusieurs nombres aléatoires.

Les N ensembles $S^i$ d'éléments de données $x^i_j$ sont de préférence différents les uns des autres. En d'autres termes, on fait en sorte que la génération, à partir du message M, des N ensembles $S^1$ à $S^N$ ne conduise pas à l'obtention d'un ensemble $S^i$ dont tous les P éléments de données $x^i_j$, pris dans l'ordre ou dans le désordre, seraient identiques aux P éléments de données $x^i_j$ de l'un des autres ensembles $S^i$.

Une ou plusieurs deuxièmes fonctions sont ensuite appliquées (bloc 207, APPLICATION OF FUNCTION(S)) aux éléments de données $x^i_j$ de chaque ensemble $S^i$. Cela permet d'obtenir (bloc 209, N SETS $T^i$ OF Q IMAGES $y^i_k$) N deuxièmes ensembles $T^i$ d'images $y^i_k$ des éléments de données $x^i_j$ par les deuxièmes fonctions. À titre d'exemple, les N ensembles $T^i$ comportent chacun un même nombre Q, entier et supérieur ou égal à deux, d'images $y^i_k$. Dans la suite de la description, on considère arbitrairement que le nombre Q d'images $y^i_k$ dans chaque ensemble $T^i$ est égal au nombre P d'éléments de données $x^i_j$ dans chaque ensemble $S^i$. Toutefois, on pourra en variante prévoir des nombres P et Q différents.

Dans la présente description, $T^i$ ($1 \leq i \leq N$) désigne le $i^{ème}$ ensemble d'images, issu de l'application des deuxièmes fonctions au $i^{ème}$ ensemble $S^i$ d'éléments de données $x^i_j$, et $y^i_k$ ($1 \leq k \leq Q$) désigne la $k^{ème}$ image du $i^{ème}$ ensemble $T^i$.

À titre d'exemple, les deuxièmes fonctions sont, en pratique, des sous-fonctions de la première fonction. Les deuxièmes fonctions sont par exemple choisies afin que leur application aux P éléments de données $x^i_j$ de chaque ensemble $S^i$ permette d'obtenir un résultat R équivalent à celui que l'on obtiendrait en appliquant directement la première fonction au message M. L'application des deuxièmes fonctions aux éléments de données $x^i_j$ issues du masquage 203 du message M présente toutefois l'avantage, notamment par rapport à une implémentation qui consisterait à appliquer directement la première fonction au message M, d'offrir une meilleure protection de l'exécution de l'algorithme de chiffrement contre d'éventuelles attaques par canaux cachés (Side-Channel Attacks - SCA, en anglais).

À titre d'exemple, l'application de la première fonction au message M fournit un résultat R égal à celui d'une combinaison, par un opérateur Ou-Exclusif, des Q images $y^i_k$ d'un même deuxième ensemble $T^i$. En d'autres termes, les Q images $y^i_k$ de chaque deuxième ensemble $T^i$ vérifient la relation suivante :

[Math 2]

$$R = y_1^i \oplus y_2^i \oplus \cdots \oplus y_Q^i$$

Dans l'exemple représenté, toutes les Q images $y_k^i$ de tous les N ensembles $T^i$ sont cumulées (bloc 211, ACCUMULATION). Le cumul 211 de toutes les N.Q images $y_k^i$ est par exemple effectué par un opérateur Ou-Exclusif. À titre d'exemple, le cumul 211 de toutes les images $y_k^i$ permet de vérifier (bloc 213, FAULT DETECTION) si l'application 207 de la ou des deuxièmes fonctions a fait l'objet, ou non, d'une attaque par faute (fault attack, en anglais).

Selon un mode de mise en œuvre, le cumul 211 est effectué en commençant par au plus Q-1 images $y_k^i$ choisies parmi les Q images $y_1^i$ à $y_Q^i$ de l'un des ensembles $T^i$. À titre d'exemple, le cumul 211 est effectué en commençant par les images $y_1^1$ à $y_{Q-1}^1$ de l'ensemble $T^1$, puis en poursuivant par les images $y_1^2$ à $y_Q^2$, $y_1^3$ à $y_Q^3$, ... $y_1^N$ à $y_Q^N$ des ensembles $T^2$ à $T^N$ et en finissant par la $Q^{ième}$ image $y_Q^1$ de l'ensemble $T^1$.

En pratique, le cumul 211 commence par exemple par une combinaison de deux images $y_k^i$ par l'opérateur Ou-Exclusif pour donner un premier résultat intermédiaire. À titre d'exemple, le premier résultat intermédiaire est mémorisé dans un accumulateur ou registre, par exemple dans la zone mémoire 103 du circuit 100 (figure 1). Le premier résultat intermédiaire est ensuite combiné, par l'opérateur Ou-Exclusif, avec une autre image $y_k^i$ pour donner un deuxième résultat intermédiaire. À titre d'exemple, le deuxième résultat intermédiaire est mémorisé dans l'accumulateur, par exemple à la place du premier résultat intermédiaire, avant d'être à son tour combiné avec encore une autre image $y_k^i$ et ainsi de suite jusqu'à obtenir le résultat final du cumul 211 de toutes les images $y_k^i$ par l'opérateur Ou-Exclusif.

On aurait pu penser cumuler toutes les images $y_k^i$ en commençant par les Q images $y_k^i$ d'un même ensemble $T^i$. Par exemple, on aurait pu cumuler d'abord les Q images $y_1^1$ à $y_Q^1$ de l'ensemble $T^1$, puis les Q images $y_1^2$ à $y_Q^2$ de l'ensemble $T^2$ et ainsi de suite jusqu'aux Q images $y_1^N$ à $y_Q^N$ de l'ensemble $T^N$. Toutefois, cela présenterait l'inconvénient de mémoriser dans l'accumulateur, en particulier à l'issue du cumul des Q images $y_1^1$ à $y_Q^1$ de l'ensemble $T^1$, un résultat intermédiaire égal au résultat R de l'application de la première fonction au message M. Cela pourrait fournir à un attaquant des informations lui permettant de découvrir le message M que l'on souhaite conserver secret.

Selon un mode de mise en œuvre, le nombre N d'ensembles $S^i$ issus du masquage 203 du message M est un entier naturel pair non nul. Dans ce cas, la vérification 213 consiste par exemple à s'assurer qu'un résultat du cumul 211 des images $y_k^i$ des N deuxièmes ensembles $T^i$ est nul.

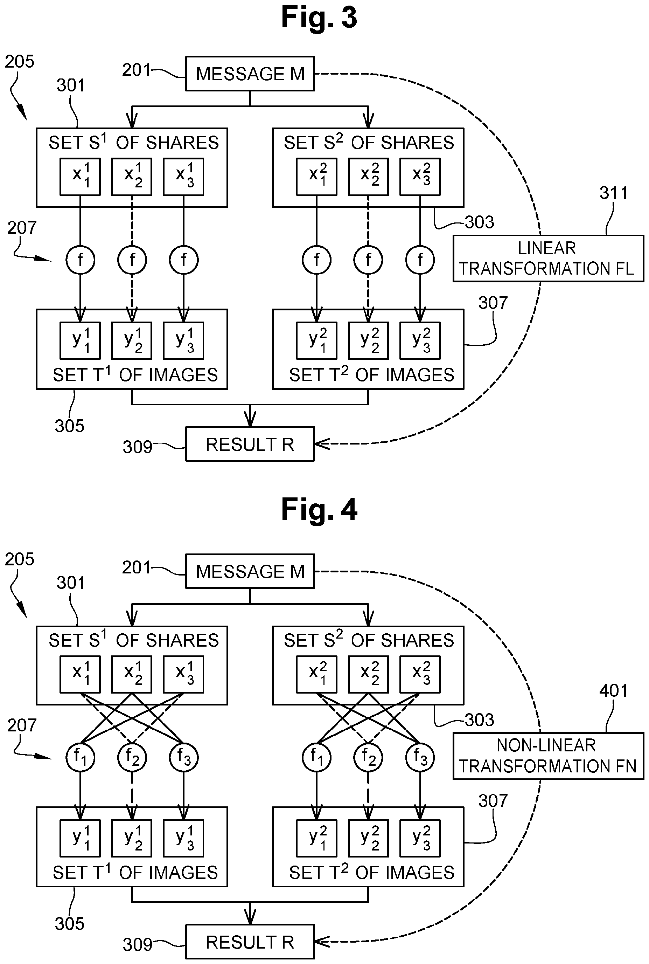

La figure 3 représente, de façon schématique et sous forme de blocs, un exemple d'application du procédé 200 de la figure 2 à une transformation linéaire, notée FL.

Dans l'exemple représenté, on considère arbitrairement que deux ensembles $S^1$ (bloc 301, SET $S^1$ OF SHARES) et $S^2$ (bloc 303, SET $S^2$ OF SHARES) d'éléments de données $x_j^i$ sont générés à partir du message M (bloc 201, MESSAGE M). À titre d'exemple, on considère pour simplifier que chaque ensemble $S^1$, $S^2$ comporte trois éléments de données $x_1^i$ à $x_3^i$. Plus précisément, dans l'exemple représenté, l'ensemble $S^1$ comporte trois éléments de données $x_1^1$, $x_2^1$ et $x_3^1$ et l'ensemble $S^2$ comporte trois éléments de données $x_1^2$, $x_2^2$ et $x_3^2$ (N = 2 et P = 3 dans ce cas).

Les éléments de données de chaque ensemble $S^1$, $S^2$ sont par exemple obtenus par masquage aléatoire du message M. À titre d'exemple, le message M est d'abord combiné par l'opérateur Ou-Exclusif avec un premier nombre aléatoire, noté R1, pour obtenir l'élément de données $x_1^1$ :

[Math 3]

$$x_1^1 = M \oplus R1$$

On peut par exemple ensuite combiner, par l'opérateur Ou-Exclusif, le premier nombre aléatoire R1 avec un deuxième nombre aléatoire, noté R2, pour obtenir l'élément de données $x_2^1$ :

[Math 4]

$$x_2^1 = R1 \oplus R2$$

D'après les relations [Math 3] et [Math 4], le message M vérifie la relation suivante :

[Math 5]

$$M = x_1^1 \oplus R1 = x_1^1 \oplus (x_2^1 \oplus R2) = x_1^1 \oplus x_2^1 \oplus R2$$

En considérant que le deuxième nombre aléatoire R2 correspond à l'élément de données $x_3^1$, c'est-à-dire en remplaçant R2 par $x_3^1$ dans la relation [Math 5] ci-dessus, les éléments de données $x_1^1$, $x_2^1$ et $x_3^1$ constituent un exemple de masquage aléatoire du message M.

De manière générale, le masquage du message M est de préférence réalisé de sorte que la connaissance de P-1 éléments de données $x_j^i$ d'un même ensemble $S^i$ ne fournisse aucune information concernant le message M. En d'autres termes, on fait en sorte que seule la connaissance des P éléments de données $x_j^i$ d'un même ensemble $S^i$ permette de reconstituer le message M.

À titre d'exemple, les éléments de données $x_1^2$, $x_2^2$ et $x_3^2$ de l'ensemble $S^2$ sont obtenus en procédant de façon analogue à ce qui a été décrit ci-dessus pour les éléments de données $x_1^1$, $x_2^1$ et $x_3^1$ de l'ensemble $S^1$. On génère par exemple les éléments de données $x_1^2$, $x_2^2$ et $x_3^2$ par combinaison du message M avec deux autres nombres aléatoires, différents des premier et deuxième nombres aléatoires R1 et R2. On garantit ainsi que les ensembles $S^1$ et $S^2$ sont différents, autrement dit que les éléments de données $x_1^1$, $x_2^1$ et $x_3^1$ de l'ensemble $S^1$ ne se retrouvent pas tous parmi les éléments $x_1^2$, $x_2^2$ et $x_3^2$ de l'ensemble $S^2$.

Dans l'exemple représenté, on applique 207 une même deuxième fonction, notée f, à chaque élément de données $x_j^i$ de chaque ensemble $S^1$, $S^2$ pour former les ensembles $T^1$ (bloc 305, SET $T^1$ OF IMAGES) et $T^2$ (bloc 307, SET $T^2$ OF IMAGES) d'images $y_k^i$. En d'autres termes, on calcule l'image $y_k^i$ de chaque élément de données $x_j^i$ par la fonction f. Plus précisément, dans l'exemple représenté, on calcule :

les images $y_1^1$, $y_2^1$ et $y_3^1$ obtenues respectivement par application de la fonction f à chacun des éléments de données $x_1^1$, $x_2^1$ et $x_3^1$ de l'ensemble $S^1$ ; et
les images $y_1^2$, $y_2^2$ et $y_3^2$ obtenues respectivement par application de la fonction f à chacun des éléments de données $x_1^2$, $x_2^2$ et $x_3^2$ de l'ensemble $S^2$.

Dans l'exemple représenté, l'application de la fonction f aux éléments de données $x_j^i$ d'un ensemble $S^i$ permet d'obtenir, à partir des images $y_k^i$ d'un ensemble $T^i$, le résultat R (bloc 309, RESULT R). Le résultat R est identique au résultat que l'on obtiendrait en appliquant directement (bloc 311, LINEAR TRANSFORMATION FL) la transformation linéaire FL au message M. La transformation FL étant supposée linéaire, elle vérifie la relation suivante :

[Math 6]

$$R = FL(M) = FL(x_1^1 \oplus x_2^1 \oplus x_3^1) = FL(x_1^1) \oplus FL(x_2^1) \oplus FL(x_3^1)$$

En considérant que la fonction f est équivalente à la transformation linéaire FL, on peut réécrire la relation [Math 6] comme suit :

[Math 7]

$$R = FL(M) = f(x_1^1) \oplus f(x_2^1) \oplus f(x_3^1) = y_1^1 \oplus y_2^1 \oplus y_3^1$$

Les relations [Math 6] et [Math 7] ci-dessus sont transposables aux éléments de données $x_1^2$, $x_2^2$ et $x_3^2$ de l'ensemble $S^2$ et aux images $y_1^2$, $y_2^2$ et $y_3^2$ de l'ensemble $T^2$. En particulier, on a :

[Math 8]

$$R = FL(M) = f(x_1^2) \oplus f(x_2^2) \oplus f(x_3^2) = y_1^2 \oplus y_2^2 \oplus y_3^2$$

Selon un mode de mise en œuvre, les deuxièmes fonctions f sont appliquées dans un ordre aléatoire aux éléments de données $x_j^i$ de chaque ensemble $S^1$, $S^2$. Cela permet notamment de renforcer la protection du calcul du résultat R contre d'éventuelles attaques par canaux cachés. Il est en particulier moins probable qu'un attaquant parvienne à isoler toutes les images $y_k^i$ d'un même ensemble $T^i$ et à reconstituer ainsi le résultat R. Cette probabilité est d'autant plus faible que les nombres N et Q sont grands.

La figure 4 représente, de façon schématique et sous forme de blocs, un autre exemple d'application du procédé 200 de la figure 2 à une transformation non linéaire, notée FN.

L'exemple d'application de la figure 4 présente des éléments communs avec l'exemple d'application de la figure 3. Ces éléments communs ne seront pas décrits à nouveau ci-après. En particulier, dans l'exemple d'application de la figure 4, les ensembles $S^1$ (bloc 301, SET $S^1$ OF SHARES) et $S^2$ (bloc 303, SET $S^2$ OF SHARES) d'éléments de données $x^i_j$ peuvent être générés à partir du message M (bloc 201, MESSAGE M) de façon analogue à ce qui a été exposé précédemment en relation avec l'exemple d'application de la figure 3.

Dans l'exemple représenté, chaque image $y^i_k$ d'un même ensemble $T^i$ est obtenue en appliquant une deuxième fonction, parmi plusieurs deuxièmes fonctions $f_1$, $f_2$ et $f_3$ différentes, à au plus P-1 éléments de données $x^i_j$ de l'ensemble $S^i$ correspondant. On forme ainsi les ensembles $T^1$ (bloc 305, SET $T^1$ OF IMAGES) et $T^2$ (bloc 307, SET $T^2$ OF IMAGES) d'images $y^i_k$. Plus précisément, dans l'exemple représenté, on obtient :

l'image $y^1_1$ par application de la fonction $f_1$ aux éléments de données $x^1_2$ et $x^1_3$ de l'ensemble $S^1$ ;
l'image $y^1_2$ par application de la fonction $f_2$ aux éléments de données $x^1_1$ et $x^1_3$ de l'ensemble $S^1$ ;
l'image $y^1_3$ par application de la fonction $f_3$ aux éléments de données $x^1_1$ et $x^1_2$ de l'ensemble $S^1$ ;
l'image $y^2_1$ par application de la fonction $f_1$ aux éléments de données $x^2_2$ et $x^2_3$ de l'ensemble $S^2$ ;
l'image $y^2_2$ par application de la fonction $f_2$ aux éléments de données $x^2_1$ et $x^2_3$ de l'ensemble $S^2$ ; et
l'image $y^2_3$ par application de la fonction $f_3$ aux éléments de données $x^2_1$ et $x^2_2$ de l'ensemble $S^2$.

Dans l'exemple représenté, l'application des fonctions $f_1$, $f_2$ et $f_3$ aux éléments de données $x^i_j$ d'un ensemble $S^i$ permet d'obtenir, à partir des images $y^i_k$ d'un ensemble $T^i$, le résultat R (bloc 309, RESULT R) identique à celui que l'on obtiendrait en appliquant directement (bloc 401, NON-LINEAR TRANSFORMATION FN) la transformation non linéaire FN au message M.

Dans l'exemple représenté, la transformation FN et les fonctions $f_1$, $f_2$ et $f_3$ vérifient en particulier la relation suivante :

[Math 9]

$$R = FN(M) = f_1(x^1_2, x^1_3) \oplus f_2(x^1_1, x^1_3) \oplus f_3(x^1_1, x^1_2) = y^1_1 \oplus y^1_2 \oplus y^1_3$$

La transformation FN et les fonctions $f^1$, $f^2$ et $f^3$ vérifient en outre la relation suivante :

[Math 10]

$$R = FN(M) = f_1(x^2_2, x^2_3) \oplus f_2(x^2_1, x^2_3) \oplus f_3(x^2_1, x^2_2) = y^2_1 \oplus y^2_2 \oplus y^2_3$$

Selon un mode de mise en œuvre, les deuxièmes fonctions $f^1$, $f^2$ et $f^3$ sont appliquées dans un ordre aléatoire aux éléments de données $x^i_j$ de chaque ensemble $S^1$, $S^2$. Cela permet notamment de renforcer la protection du calcul du résultat R contre d'éventuelles attaques par canaux cachés et d'obtenir des avantages analogues à ceux de l'exemple d'application exposé en relation avec la figure 3.

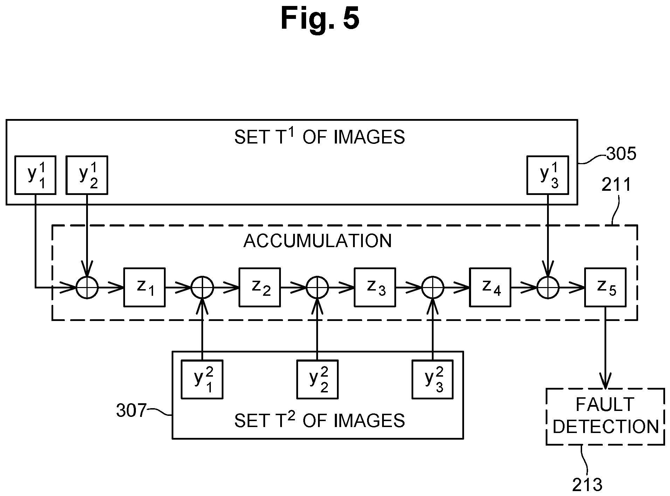

La figure 5 représente, de façon schématique et sous forme de blocs, des étapes associées au mode de mise en œuvre du procédé 200 de la figure 2.

Dans l'exemple représenté, on cumule (bloc 211, ACCUMULATION) les images $y^i_k$ des ensembles $T^1$ (bloc 305, SET $T^1$ OF IMAGES) et $T^2$ (bloc 307, SET $T^2$ OF IMAGES). En figure 5, les ensembles $T^1$ et $T^2$ peuvent être obtenus indifféremment à partir de l'exemple d'application de la figure 3 ou de l'exemple d'application de la figure 4.

Dans l'exemple représenté, on commence par combiner, par un opérateur Ou-Exclusif, les images $y^1_1$ et $y^1_2$ de l'ensemble $T^1$ pour obtenir un résultat intermédiaire, noté $z_1$. Le résultat intermédiaire $z_1$ est ensuite combiné, par un opérateur Ou-Exclusif, avec l'image $y^2_1$ de l'ensemble $T^2$ pour obtenir un autre résultat intermédiaire, noté $z_2$. Le résultat intermédiaire $z_2$ est alors combiné, par un opérateur Ou-Exclusif, avec l'image $y^2_2$ de l'ensemble $T^2$ pour obtenir encore un autre résultat intermédiaire, noté $z_3$. Puis, le résultat intermédiaire $z_3$ est combiné, par un opérateur Ou-Exclusif, avec l'image $y^2_3$ de l'ensemble $T^2$ pour obtenir encore un autre résultat intermédiaire, noté $z_4$. Enfin, le résultat intermédiaire $z_4$ est combiné, par un opérateur Ou-Exclusif, avec l'image $y^1_3$ de l'ensemble $T^1$ pour obtenir encore un autre résultat intermédiaire, noté $z_5$. Dans l'exemple représenté, le résultat intermédiaire $z_5$ correspond au résultat final du cumul 211 des images $y^1_1$, $y^1_2$ et $y^1_3$ de l'ensemble $T^1$ et des images $y^2_1$, $y^2_2$ et $y^2_3$ de l'ensemble $T^2$.

Dans l'exemple représenté, les résultats $z_1$ à $z_5$ vérifient la relation suivante :

[Math 11]

$$z_5 = z_4 \oplus y_3^1 = z_3 \oplus y_3^2 \oplus y_3^1 = z_2 \oplus y_2^2 \oplus y_3^2 \oplus y_3^1 = z_1 \oplus y_1^2 \oplus y_2^2 \oplus y_3^2 \oplus y_3^1$$

En pratique, les résultats intermédiaires $z_1$ à $z_5$ sont par exemple successivement mémorisés dans la zone mémoire 103 du circuit 100 (figure 1). À titre d'exemple, la zone mémoire 103 est configurée pour mémoriser un seul résultat intermédiaire à la fois, un contenu de la zone mémoire 103 étant par exemple mis à jour à l'issue du calcul de chaque nouveau résultat intermédiaire.

Selon un mode de mise en œuvre, on vérifie (bloc 213, FAULT DETECTION) que le résultat $z_5$ du cumul des images $y_k^i$ des deux deuxièmes ensembles $T^1$ et $T^2$ est nul. Dans l'exemple représenté, si l'application de la transformation FL ou FN au message M, c'est-à-dire l'application de la fonction f ou des fonctions $f^1$, $f^2$ et $f^3$ aux éléments de données $x_j^i$ des ensembles $S^1$ et $S^2$, n'a pas subi d'attaque par faute, le résultat $z_5$ est égal à zéro d'après la relation suivante :

[Math 12]

$$z_5 = y_1^1 \oplus y_2^1 \oplus y_1^2 \oplus y_2^2 \oplus y_3^2 \oplus y_3^1 = R \oplus R = 0$$

Un avantage du mode de mise en œuvre exposé ci-dessus en relation avec les figures 2 à 5 réside dans le fait que le cumul 211 des images $y_1^1$, $y_2^1$ et $y_3^1$ de l'ensemble $T^1$ et des images $y_1^2$, $y_2^2$ et $y_3^2$ de l'ensemble $T^2$ permet d'éviter de mémoriser la valeur du résultat R dans la mémoire 103 du circuit 100 (figure 1). On évite ainsi par exemple de donner la possibilité à un éventuel attaquant d'obtenir le résultat R en observant le contenu de la mémoire 103.

Divers modes de réalisation, modes de mise en œuvre et variantes ont été décrits. La personne du métier comprendra que certaines caractéristiques de ces divers modes de réalisation, modes de mise en œuvre et variantes pourraient être combinées, et d'autres variantes apparaîtront à la personne du métier.

Enfin, la mise en œuvre pratique des modes de réalisation, modes de mise en œuvre et variantes décrits est à la portée de la personne du métier à partir des indications fonctionnelles données ci-dessus. En particulier, bien que l'on ait décrit en relation avec les figures 3 et 4 des exemples d'application dans lesquels deux ensembles $S^1$ et $S^2$ comportant chacun trois éléments de données sont générés à partir du message M, on peut en pratique prévoir de générer un nombre N supérieur à deux d'ensembles $S^i$, par exemple dix ensembles $S^i$, comportant chacun un nombre P d'éléments de données $x_j^i$ supérieur à trois, par exemple cinq éléments de données $x_j^i$. De manière générale, la personne du métier est capable d'adapter les nombres N et P en fonction d'un niveau de protection à atteindre.

La personne du métier est par ailleurs en mesure de choisir la deuxième fonction f et les deuxièmes fonctions $f_1$, $f_2$ et $f_3$ de sorte que, lorsque les éléments de données $x_j^i$ suivent une distribution uniforme, les images $y_k^i$ suivent également une distribution uniforme.

**Revendications**

1. Procédé (200) de détection de fautes dans une application, par un circuit électronique (100), d'une première fonction (FL ; FN) à un message (M), comprenant les étapes suivantes :

   générer (203), à partir du message, un nombre N pair non nul de premiers ensembles ($S^i$) différents comportant chacun P éléments de données ($x_j^i$) ;
   appliquer (207), aux P éléments de données de chaque premier ensemble, une ou plusieurs deuxièmes fonctions (f ; $f_1$, $f_2$, $f_3$) fournissant, pour chaque premier ensemble, un deuxième ensemble ($T^i$) comportant Q images ($y_k^i$) ; et
   cumuler (211) toutes les images, en commençant par au plus Q-1 images choisies parmi les Q images d'un même deuxième ensemble.

2. Procédé selon la revendication 1, dans lequel chaque premier ensemble ($S^i$) d'éléments de données ($x_j^i$) est généré (203) par un masquage, de préférence aléatoire, du message (M) .

3. Procédé selon la revendication 2, dans lequel le masquage du message (M) est effectué par un opérateur Ou-Exclusif.

4. Procédé selon l'une quelconque des revendications 1 à 3, dans lequel le cumul (211) des images ($y_k^i$) est effectué par un opérateur Ou-Exclusif.

**5.** Procédé selon l'une quelconque des revendications 1 à 4, dans lequel la première fonction (FL) est une transformation linéaire.

**6.** Procédé selon la revendication 5, dans lequel chaque image ($y^i_k$) d'un même deuxième ensemble ($T^i$) est obtenue en appliquant une même deuxième fonction (f) à chaque élément de données ($x^i_j$) du premier ensemble ($S^i$) correspondant.

**7.** Procédé selon l'une quelconque des revendications 1 à 4, dans lequel la première fonction (FN) est une transformation non linéaire.

**8.** Procédé selon la revendication 7, dans lequel chaque image ($y^i_k$) d'un même deuxième ensemble ($T^i$) est obtenue en appliquant une deuxième fonction, parmi plusieurs deuxièmes fonctions différentes ($f_1$, $f_2$, $f_3$), à au plus P-1 éléments de données ($x^i_j$) du premier ensemble ($S^i$) correspondant.

**9.** Procédé selon l'une quelconque des revendications 1 à 8, comprenant l'étape de vérifier (213) si un résultat ($z_5$) du cumul (211) des images ($y^i_k$) des N deuxièmes ensembles ($T^i$) est nul.

**10.** Procédé selon l'une quelconque des revendications 1 à 9, dans lequel la ou les deuxièmes fonctions (f ; $f_1$, $f_2$, $f_3$) sont appliquées (207) dans un ordre aléatoire aux éléments de données ($x^i_j$) de chaque premier ensemble ($S^i$).

**11.** Circuit électronique (100) configuré pour mettre en œuvre le procédé (200) selon l'une quelconque des revendications 1 à 10.

**12.** Circuit selon la revendication 11, dans lequel une zone mémoire (103) est destinée à mémoriser des valeurs intermédiaires ($z_1$, $z_2$, $z_3$, $z_4$, $z_5$) provenant du cumul (211) des images ($y^i_k$).

## Fig. 1

## Fig. 2

$$200$$

201 — MESSAGE M

DATA MASKING — 203

205 — N SETS $S^i$ OF P SHARES $x^i_j$

APPLICATION OF FUNCTION(S) — 207

209 — N SETS $T^i$ OF Q IMAGES $y^i_k$

ACCUMULATION — 211

213 — FAULT DETECTION

# Fig. 3

MESSAGE M — 201

205 — 301

SET S$^1$ OF SHARES

$x^1_1$  $x^1_2$  $x^1_3$

SET S$^2$ OF SHARES

$x^2_1$  $x^2_2$  $x^2_3$

303

311

LINEAR TRANSFORMATION FL

207

f  f  f

f  f  f

$y^1_1$  $y^1_2$  $y^1_3$

$y^2_1$  $y^2_2$  $y^2_3$

307

SET T$^1$ OF IMAGES

SET T$^2$ OF IMAGES

305

309 — RESULT R

# Fig. 4

MESSAGE M — 201

205 — 301

SET S$^1$ OF SHARES

$x^1_1$  $x^1_2$  $x^1_3$

SET S$^2$ OF SHARES

$x^2_1$  $x^2_2$  $x^2_3$

303

401

NON-LINEAR TRANSFORMATION FN

207

$f_1$  $f_2$  $f_3$

$f_1$  $f_2$  $f_3$

$y^1_1$  $y^1_2$  $y^1_3$

$y^2_1$  $y^2_2$  $y^2_3$

307

SET T$^1$ OF IMAGES

SET T$^2$ OF IMAGES

305

309 — RESULT R

# Fig. 5

SET T$^1$ OF IMAGES

305

211

$y^1_1$ $y^1_2$ $y^1_3$

ACCUMULATION

$z_1$ $z_2$ $z_3$ $z_4$ $z_5$

$y^2_1$ $y^2_2$ $y^2_3$

307 SET T$^2$ OF IMAGES

FAULT DETECTION

213

Europäisches
Patentamt

European
Patent Office

Office européen
des brevets

**RAPPORT DE RECHERCHE EUROPEENNE**

Numéro de la demande

EP 21 16 0883

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 2 468 419 A (SAMSUNG ELECTRONICS CO LTD [KR]) 8 septembre 2010 (2010-09-08) * page 13, ligne 30 - page 16, ligne 6; figures 5,9,10 * ----- | 1-12 | INV. G09C1/00 H04L9/00 H04L9/06 |
| X | EP 2 320 596 A1 (ST MICROELECTRONICS ROUSSET [FR]) 11 mai 2011 (2011-05-11) * alinéas [0043] - [0051]; figure 5 * ----- | 1-4,7, 9-12 | |
| A | TILLICH STEFAN ET AL: "Protecting AES Software Implementations on 32-Bit Processors Against Power Analysis", 5 juin 2007 (2007-06-05), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 141 - 157, XP047503088, ISBN: 978-3-319-10403-4 * section 3 * ----- | 10 | |

DOMAINES TECHNIQUES RECHERCHES (IPC)

G09C
H04L

Le présent rapport a été établi pour toutes les revendications

| Lieu de la recherche | Date d'achèvement de la recherche | Examinateur |
|---|---|---|
| Munich | 8 juillet 2021 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 16 0883

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-07-2021

| Document brevet cité au rapport de recherche | | Date de publication | Membre(s) de la famille de brevet(s) | | Date de publication |
|---|---|---|---|---|---|
| GB 2468419 | A | 08-09-2010 | AUCUN | | |
| EP 2320596 | A1 | 11-05-2011 | EP | 2320596 A1 | 11-05-2011 |
| | | | FR | 2952256 A1 | 06-05-2011 |
| | | | US | 2011170691 A1 | 14-07-2011 |

EPO FORM P0460

Pour tout renseignement concernant cette annexe : voir Journal Officiel de l'Office européen des brevets, No.12/82